# EUROPÄISCHE PATENTANMELDUNG

(11) **EP 0 703 270 A2**
(43) Veröffentlichungstag der Anmeldung: **27.03.1996**
(21) Anmeldenummer: 95114013.6
(22) Anmeldetag: 07.09.1995
(51) Int. Cl.: C08K 5/47, C09B 49/06, C07D 513/02

(54) **Massefärben von Kunststoffen**

(30) Priorität: 20.09.1994 DE 4433438
(71) Anmelder: BAYER AG, D-51368 Leverkusen (DE)
(72) Erfinder: Roschger, Peter, Dr., D-51063 Köln (DE); Michaelis, Stephan, Dr., D-51519 Odenthal (DE); Fürstenwerth, Hauke, Dr., D-51381 Leverkusen (DE)

(57) **Zusammenfassung**

Massefärben von Kunststoffen mit Farbstoffen der Formel (I) 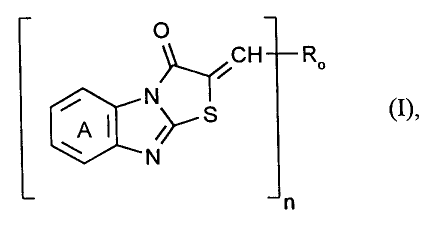
worin
- n: 1 oder 2, vorzugsweise 1 bedeutet,
- Rₒ: für n = 1, Aryl, Hetaryl oder Heterocyclylidenmethyl,
für n = 2, eine direkte Bindung oder Arylen bedeutet und
- der Ring A: unsubstituiert oder durch C₁-C₄-Alkyl, C₅-C₈-Cycloalkyl, C₆-C₁₀-Aryl, C₁-C₄-Alkyloxy, C₆-C₁₀-Aryloxy, C₆-C₁₀-Aryl- oder C₁-C₄-Alkylsulfonyl, Cyano, Halogen, insbesondere Chlor oder Brom, einen Rest der Formel - COR₁, worin R₁ für C₁-C₄-Alkoxy, Amino, C₁-C₄-Alkylamino, Di-C₁-C₄-alkylamino, C₆-C₁₀-Arylamino, C₁-C₄-Alkyl oder C₆-C₁₀-Aryl steht, substituiert ist oder einen ankondensierten aromatischen oder cycloaliphatischen Ring enthält,
wobei als Kunststoffe insbesondere Thermoplasten, vorzugsweise Vinylpolymere, Polyester oder Polyamide verwendet werden.

## Beschreibung

Die vorliegende Erfindung betrifft ein Verfahren zum Massefärben von Kunststoffen, teilweise noch neue Farbstoffe sowie ein Verfahren zu deren Herstellung. Die Massefärbung von Kunststoffen, beispielsweise von Thermoplasten, ist beispielsweise bekannt aus GB-A-1 386 846 und US-A-3 655 670.

Nachteilig bei den bekannten Verfahren ist, daß die zur Verwendung kommenden Farbstoffe nur farbschwache gelbe (vgl. GB-A-1 386 846, US-A-3 655 670) Farbtöne liefern.

Die vorliegende Erfindung betrifft ein Verfahren zum Massefärben von Kunststoffen mit Farbstoffen der Formel (I) 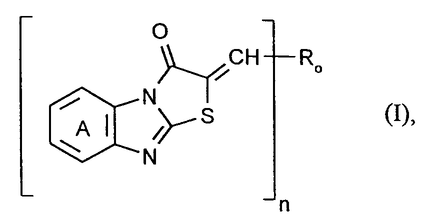
worin
- n: 1 oder 2, vorzugsweise 1 bedeutet,
- Rₒ: für n = 1, Aryl, Hetaryl oder Heterocyclylidenmethyl,
für n = 2, eine direkte Bindung oder Arylen bedeutet und
- der Ring A: unsubstituiert oder durch C₁-C₄-Alkyl, C₅-C₈-Cycloalkyl, C₆-C₁₀-Aryl, C₁-C₄-Alkyloxy, C₆-C₁₀-Aryloxy, C₆-C₁₀-Aryl- oder C₁-C₄-Alkylsulfonyl, Cyano, Halogen, insbesondere Chlor oder Brom, einen Rest der Formel -COR₁, worin R₁ für C₁-C₄-Alkoxy, Amino, C₁-C₄-Alkylamino, Di-C₁-C₄-alkylamino, C₆-C₁₀-Arylamino, C₁-C₄-Alkyl oder C₆-C₁₀-Aryl steht, substituiert ist oder einen ankondensierten aromatischen oder cycloaliphatischen Ring enthält.

In einer bevorzugten Ausführungsform des Verfahrens kommen Farbstoffe der Formel (II) 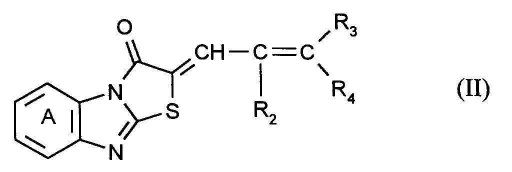
zum Einsatz, worin
- R₂ und R₄: zusammen mit den C-Atomen, an die sie gebunden sind, einen unsubstituierten oder substituierten C₆-C₁₀-aromatischen, insbesondere Phenyl- oder Naphthyl-, oder heteroaromatischen, insbesondere einen gegebenenfalls ein- oder zweifach benzanellierten Thiophen-, Furan-, Pyrrol-, Thiazol-, Oxazol-, Imidazol-, Pyridin-, Pyran- oder Pyrimidin-Rest bilden und
- R₃: für H, C₁-C₄-Alkyl, Halogen, insbesondere Cl und Br, OH, C₁-C₆-Alkoxy, Acyloxy, C₆-C₁₀-Aryloxy, C₁-C₆-Alkylthio, heterocyclisches 5- bis 7-gliedriges Amin, C₆-C₁₀-Arylthio, Di-C₁-C₆-alkylamino oder Acylamino steht, wobei die möglichen Substituenten an dem durch R₂ und R₄ gebildeten Ring vorzugsweise die Bedeutung von R₃ besitzen, oder
- R₃ und R₄: zusammen mit dem C-Atom, an das sie gebunden sind, den Rest eines unsubstituierten oder substituierten heterocyclischen Rings bilden, wobei die möglichen Substituenten vorzugsweise die Bedeutung von R₃ besitzen oder denen des Ringes A entsprechen,
- R₂: für H oder C₁-C₆-Alkyl steht und
der Ring A in der oben angegebenen Bedeutung substituiert sein kann.

Unter Acyl wird dabei vorzugsweise (C₁-C₆-Alkyl)-CO-, (C₆-C₁₀-Aryl)-CO-, (C₁-C₆-Alkyl)-SO₂- oder (C₆-C₁₀-Aryl)-SO₂- verstanden.

Die beiden Alkylgruppen des Dialkylamins können voneinander unabhängige Bedeutungen haben und gegebenenfalls unabhängig voneinander substituiert sein.

In einer besonders bevorzugten Ausführungsform des Verfahrens kommen Farbstoffe der Formel (III) 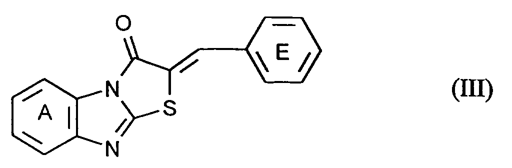
zum Einsatz, worin
der Ring A in der obengenannten Weise substituiert sein kann,
und der Ring E unsubstituiert oder mit C₁-C₆-Alkyl, Halogen, insbesondere F, Cl und Br, OH, C₁-C₆-Alkoxy, C₆-C₁₀-Aryloxy, C₅-C₈-Cycloalkyl, Acyloxy, Di-C₁-C₆-alkylamino, heterocyclisches 5- bis 7-gliedriges Amin, Acylamino, C₁-C₆-Alkylthio oder Arylthio substituiert ist oder einen ankondensierten aromatischen, heterocyclischen oder aliphatischen 5- bis 7-gliedrigen Ring enthält.

Bevorzugt werden Farbstoffe der Formel (III) eingesetzt, worin der Ring E ein bis drei voneinander unabhängige C₁-C₄-Alkoxyreste trägt, die gegebenenfalls durch Cl, CN, OH, C₁-C₆-Alkoxycarbonyl, C₁-C₆-Alkoxy oder Acyloxy substituiert sind oder zwei der C₁-C₆-Alkoxyreste über eine Methylenbrücke miteinander verbunden sind oder
einen C₆-C₁₀-Aryloxyrest, insbesondere einen Phenyloxy- oder Naphthyloxyrest trägt, der gegebenenfalls durch C₁-C₆-Alkyl, Cl, Br, C₁-C₄-Alkoxy oder Alkoxycarbonyl substituiert ist, oder
einen Di-(C₁-C₄)-alkylaminorest trägt, der unsubstituiert oder durch Cl, Phenyl, CN, OH, C₁-C₄-Alkoxy, Di-(C₁-C₄)-alkylamino, C₁-C₆-Alkoxycarbonyl und/oder Acyloxy substituiert ist und/oder gegebenenfalls mit einer oder beiden ortho-Positionen des E-Ringes unter Bildung eines heterocyclischen, vorzugsweise 5- oder 6-gliedrigen Rings verknüpft ist oder einen heterocyclischen, vorzugsweise 5- oder 6-gliedrigen Aminorest, der vorzugsweise ein oder zwei Stickstoffatome und 0 bis 1 Sauerstoff- oder Schwefelatome als Heteroatome enthält, trägt,
einen C₁-C₆-Alkylthiorest trägt, der gegebenenfalls durch Phenyl, OH, Acyloxy oder C₁-C₄-Alkoxycarbonyl substituiert ist oder
einen Phenyl- oder Naphthylthiorest trägt, der gegebenenfalls durch Cl, C₁-C₆-Alkyl oder C₁-C₆-Alkoxycarbonyl substituiert ist und
der Ring E gegebenenfalls weiter substituiert ist mit
bis zu zwei voneinander unabhängigen C₁-C₄-Alkylgruppen, Halogenatomen, insbesondere Cl oder Br und/oder
einer Acylamino-, Acyloxy- oder Hydroxy-Gruppe.

In einer besonders bevorzugten Ausführungsform ist die para-Position des Ringes E durch einen der obengenannten Alkoxy-, Aryloxy-, Alkylthio-, Arylthio oder Dialkylaminoreste substituiert.

In einer ganz besonders bevorzugten Verfahrensweise werden Farbstoffe der Formel (III) eingesetzt, worin der Ring E einen Di-(C₁-C₄)-alkylaminorest trägt, der unsubstituiert oder durch Cl, Phenyl, CN, OH, C₁-C₄-Alkoxy, Di-(C₁-C₄)-alkylamino, C₁-C₆-Alkoxycarbonyl und/oder Acyloxy substituiert ist und/oder gegebenenfalls mit einer oder beiden ortho-Positionen des E-Ringes unter Bildung eines heterocyclischen, vorzugsweise 5- oder 6-gliedrigen Rings verknüpft ist oder einen heterocyclischen, vorzugsweise 5- oder 6-gliedrigen Aminorest, der vorzugsweise ein oder zwei Stickstoffatome und 0 bis 1 Sauerstoff- oder Schwefelatome als Heteroatome enthält, trägt.

Besonders geeignete Ringe E sind beispielsweise wie folgt substituiert: 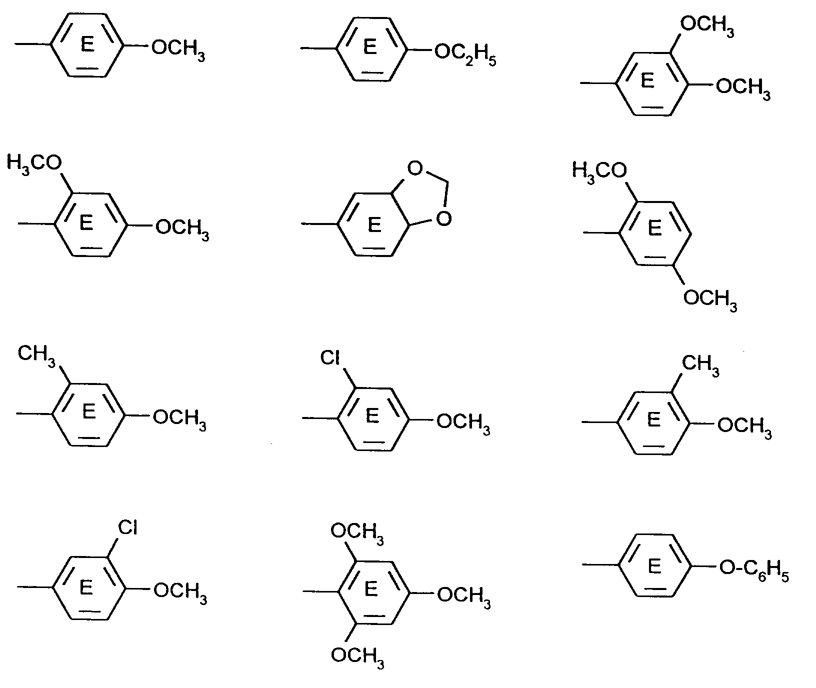 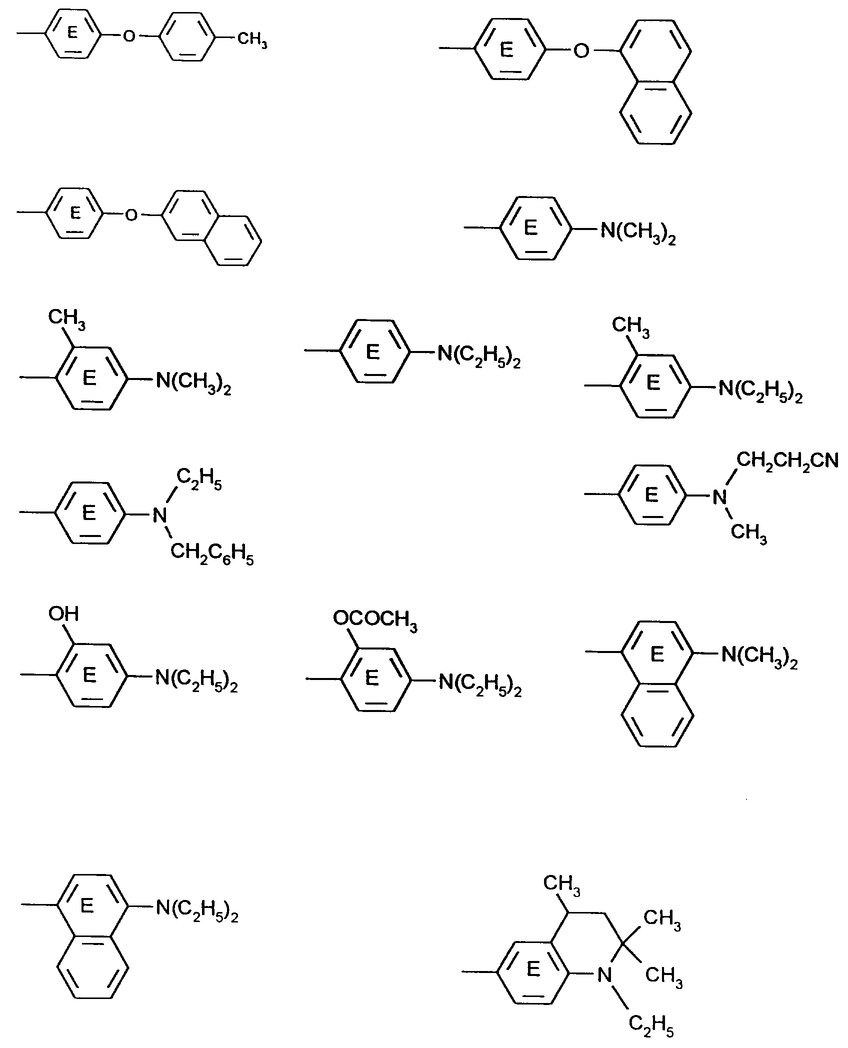 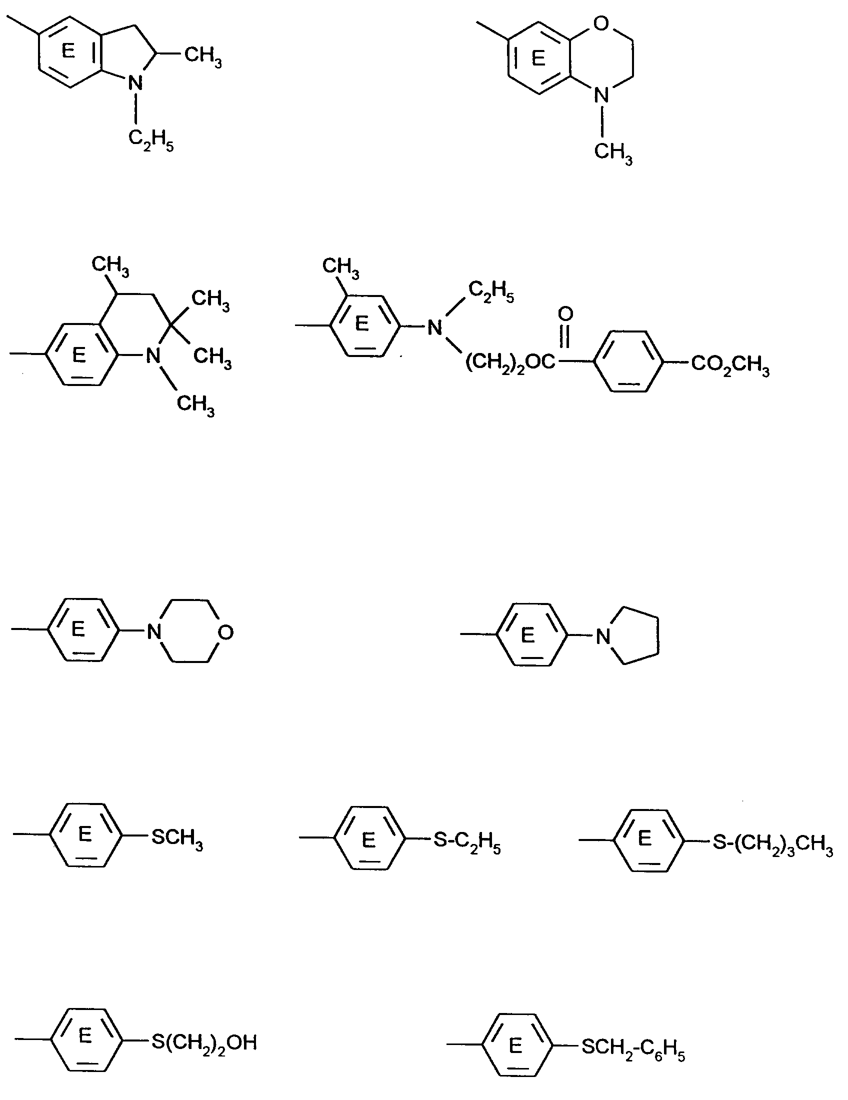 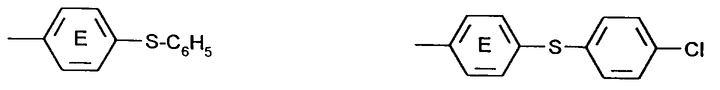
In einer weiterhin besonders bevorzugten Ausführungsform kommen Farbstoffe der Formel (II) zum Einsatz, worin
- R₃ und R₄: zusammen mit dem C-Atom, an das sie gebunden sind, den Rest eines gegebenenfalls ein- oder zweifach benzanellierten und/oder weitersubstituierten Pyrrols, Thiazols, Oxazols, Imidazols, Pyridins, Pyrans oder Pyrimidins bilden, und der Ring A wie oben substituiert sein kann und R₂ die obige Bedeutung besitzt.

Ebenfalls ganz besonders bevorzugt werden dabei Farbstoffe der Formel (IV) eingesetzt, 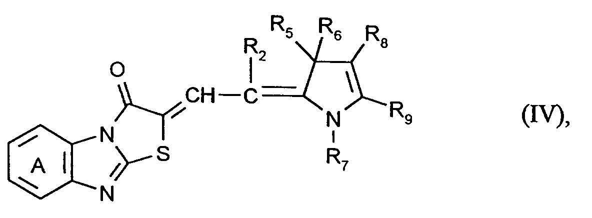
worin
der Ring A in der obige Weise substituiert sein kann,
- R₂: die obige Bedeutung hat, vorzugsweise für H steht,
- R₅, R₆: unabhängig voneinander für C₁-C₄-Alkyl, vorzugsweise für CH₃, C₂H₅ oder C₃H₇ stehen oder gemeinsam zusammen mit dem C-Atom, an das sie gebunden sind, einen gegebenenfalls substituierten carbocyclischen 5- oder 6-Ring bilden, vorzugsweise zusammen eine Tetra- oder Penta-Methylengruppe bilden,
- R₇: eine unsubstituierte oder durch Phenyl, Cl, OH, CN, C₁-C₆-Alkoxycarbonyl, C₁-C₆-Alkoxy, Di-(C₁-C₄)-alkylamino oder Acyloxy substituierte C₁-C₄-Alkylgruppe bedeutet und
- R₈, R₉: gemeinsam zusammen mit den C-Atomen, an die sie gebunden sind, einen unsubstituierten oder substituierten Benzol- oder Naphthalinring bilden, wobei als bevorzugte Substituenten Cl, C₁-C₄-Alkyl, C₁-C₄-Alkoxycarbonyl und C₁-C₄-Alkoxy zu nennen sind.

Geeignete Reste der Formel 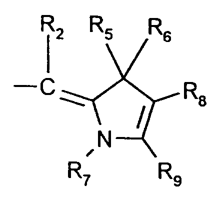
sind beispielsweise: 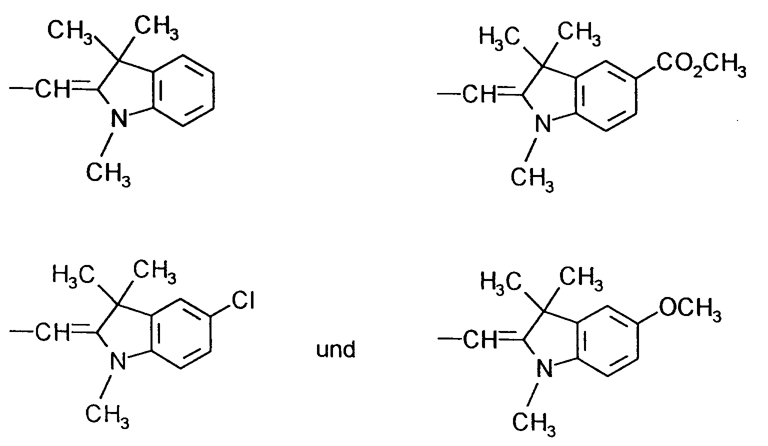
In einer anderen Ausführungsform des Verfahrens werden Farbstoffe der Formel (I) verwendet, worin n = 2 bedeutet und
R₀ für eine direkte Bindung oder einen unsubstituierten oder substituierten C₆-C₁₀-Arylenrest, vorzugsweise Phenylen oder Naphthylen, insbesondere 1,4-Phenylen, steht, wobei als mögliche Substituenten vorzugsweise die unter R₃ genannten Bedeutungen in Frage kommen, der Arylenrest jedoch insbesondere unsubstituiert ist, und
der Ring A in der oben angegebenen Weise substituiert sein kann.

In einer weiteren Ausführungsform des Verfahrens werden die oben beschriebenen Farbstoffe, insbesondere die der Formel (III) und (IV), bevorzugt verwendet, worin
- der Ring A: einen in 3,4- oder 4,5-Stellung ankondensierten unsubstituierten oder substituierten Benzoring enthält, und/oder durch
- 0 bis 2: voneinander unabhängigen C₁-C₆-Alkylgruppen oder Chloratome und/oder
- 0 bis 1: C₁-C₄-Alkoxy- oder C₁-C₄-Alkoxycarbonylreste substituiert ist.

Beispielhaft werden die nachfolgenden geeigneten Substitutionen an Ring A dargestellt: 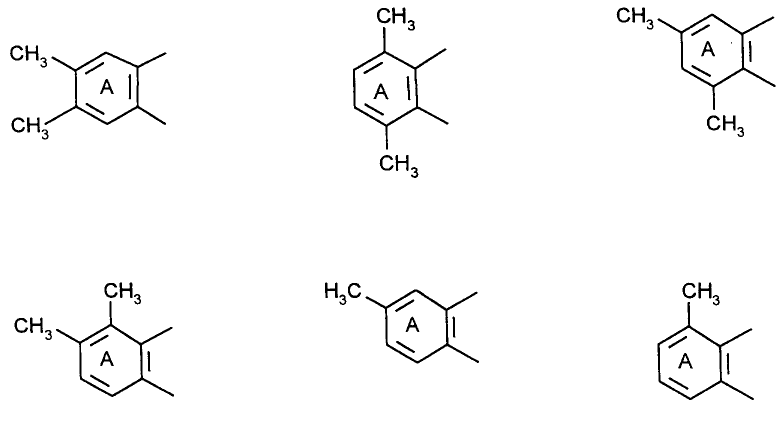 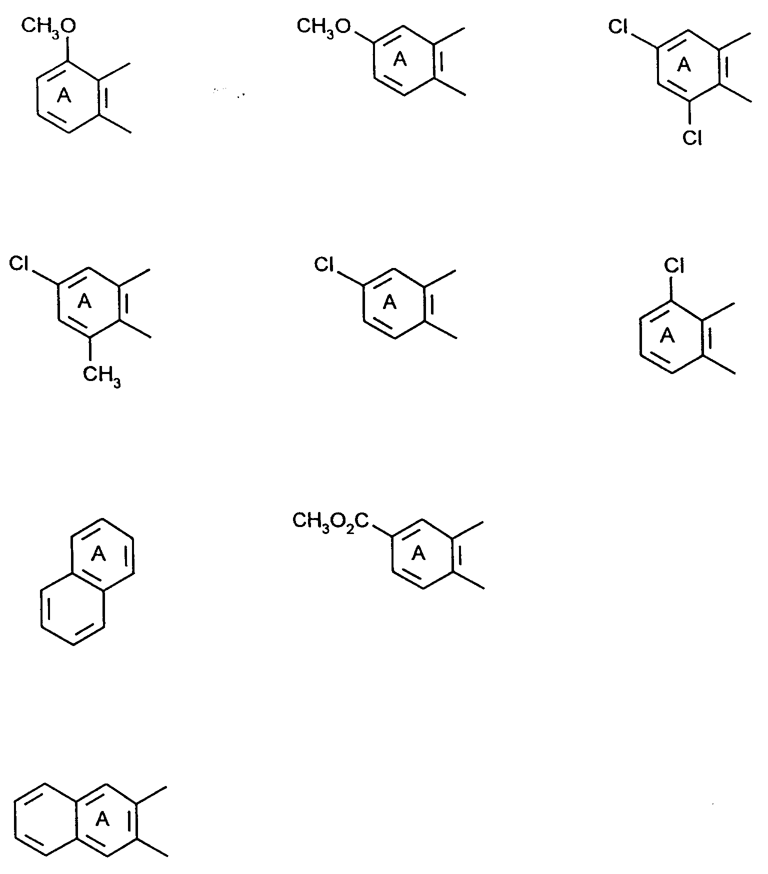
Farbstoffe der Formel (I) sind zum Teil schon bekannt, z.B. aus US 4 304 908; GB 1 392 499; Zh. Obshchei khimi, Vol. 35, No. 7 (1965), engl. Transl. S. 1282-1285; Heterocycles 21, S. 719 (1984).

Weiterer Gegenstand der Erfindung ist ein Verfahren zur Herstellung der Farbstoffe der Formel (I), dadurch gekennzeichnet, daß man
a) Verbindungen der Formel 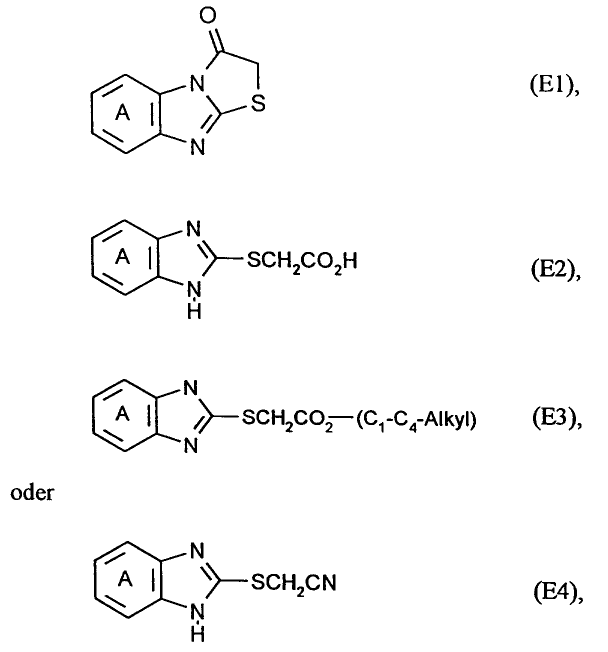 worin der Ring A in obengenannten Weise substituiert ist,
   mit Verbindungen der Formel

   Rₒ-CH=Y (E5),

   in welcher
   - Rₒ: für n = 1 oder 2 die obigen Bedeutungen besitzt und
   - Y: für O, (C₆-C₁₀-Aryl)N, insbesondere Phenyl-N, (C₁-C₄-Alkyl)₂N^{⊕}, insbesondere (CH₃)₂N^{⊕}, (C₆-C₁₀-Aryl)(C₁-C₅-Acyl)N^{⊕}, insbesondere (Phenyl)(CH₃CO)N^{⊕} oder (C₆-C₁₀-Aryl)(C₁-C₅-Alkyl)N^{⊕}, insbesondere (Phenyl)(CH₃)N^{⊕} steht,
   unter Abspaltung von YH₂ (und gegebenenfalls H₂O, Alkyl-OH bzw. NH₃) in einem Lösungsmittel oder in der Schmelze gegebenenfalls in Gegenwart eines Katalysators bei einer Temperatur von 0 bis 250°C umsetzt, wobei vorzugsweise das YH₂ durch den Zusatz bindender Mittel (z.B. Acetanhydrid) oder mittels physikalischer Methoden (z.B. destillativ) entfernt werden kann, oder
b) Verbindungen der Formel 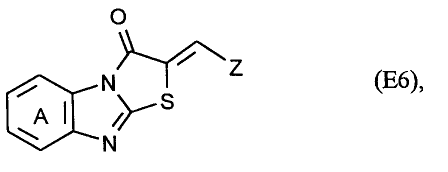 in welcher
   - Z: für OH, O(C₁-C₄-Alkyl), insbesondere -OCH₃, O(C₁-C₅-Acyl), insbesondere O-CO-CH₃, Cl, Br, (C₁-C₄-Alkyl)₂N, insbesondere (CH₃)₂N, (C₆-C₁₀-Aryl)NH, insbesondere Phenyl-NH, (C₆-C₁₀-Aryl)(C₁-C₄-Alkyl)N, insbesondere (Phenyl)(CH₃)N, (C₆-C₁₀-Aryl)(C₁-C₅-Acyl)N, insbesondere (Phenyl)(COCH₃)N, NH₂ oder (C₁-C₄-Alkyl)NH, insbesondere CH₃NH steht, und R₂ und R₃ die unter a) genannte Bedeutung haben,
   mit Verbindungen der Formel

   Rₒ-H (E7)

   unter Abspaltung von ZH gegebenenfalls in einem Lösungsmittel oder einer Schmelze bei einer Temperatur von 0 bis 250°C umsetzt. Vorteilhaft ist es auch hier, einen Katalysator zuzusetzen und ZH zu binden.

Die Farbstoffe der Formel (I) fallen isomerenrein oder in Form von Isomerenmischungen an und können in jedem Falle für das erfindungsgemäße Verfahren zum Massefärben verwendet werden.

Bevorzugt wird nach der Herstellungsvariante a) unter Verwendung der Verbindung (E1) oder (E2) verfahren.

Allgemein als Lösungsmittel für die beiden genannten Verfahrensvarianten eignen sich Alkohole wie z.B. Ethanol, Methanol, Propanole, Butanole usw., Carbonsäuren wie z.B. Ameisensäure, Essigsäure, Propionsäure usw., Ester, z.B. Ethylacetat, polare aprotische Lösungsmittel, z.B. Dimethylformamid, N-Methylpyrrolidon, Dimethylacetamid, Dimethylsulfoxid usw., Aromaten, z.B. Benzol, Toluol, Xylole, Chlor-, Dichlor-, Trichlorbenzol usw., Ether, z.B. Tetrahydrofuran, Dioxan, Methyl-t-butylether usw., Glykole und deren Ether, z.B. Mono-, Di-, Tri-, Tetraethylenglykol, Propylenglykol, deren Methyl-, Ethyl-, Butyl-ether usw., Halogenaliphaten, z.B. Dichlormethan, Dichlorethan, Chloroform, Phenole, Kresole, Nitrobenzol u.a.

Als Katalysatoren kommen saure wie basische in Frage.

Als saure Katalysatoren seien genannt: Carbonsäuren, z.B. Essigsäure, Propionsäure, Chloressigsäure, Benzoesäure usw., Sulfonsäuren, z.B. Toluolsulfonsäure, Methansulfonsäure usw., anorganische Säuren wie z.B. Schwefel-, Salz-, Phosphor-, Bromwasserstoffsäure usw., Zinkchlorid, Aluminiumchlorid, Bortrifluorid usw.

Basische geeignete Katalysatoren sind beispielsweise: organische Basen, z.B. Amine wie Triethylamin, Dialkylamine, Piperidin, Pyrrolidin, Morpholin, N,N-Dimethylanilin usw., Alkoholate, z.B. Natriummethylat, Kalium-t-butylat usw., Carbonsäuresalze, z.B. Natrium- oder Kaliumacetat usw., Alkali- oder Erdalkalioxide, -hydroxide oder -carbonate z.B. Natrium-, Kaliumhydroxid, Calciumoxid, Magnesiumoxid, Natriumcarbonat, Kaliumcarbonat, Natriumhydrogencarbonat, Ammoniak, Tetrabutylammoniumhydroxid usw.

Geeignete Kondensationsmittel sind z.B. Säureanhydride wie Acetanhydrid, Propionsäureanhydrid usw., Säurechloride wie Acetyl-, Propionyl- oder Phosphorylchlorid usw.

Als Umsetzungstemperatur für die unter a) bzw. b) beschriebenen Herstellungsverfahren kommt der Bereich von 0 bis 250°C in Frage, vorzugsweise zwischen 15 und 220°C.

Die bereits bekannten Farbstoffe der Formel (I) können in Analogie zum erfindungsgemäßen Verfahren hergestellt werden.

Unter Massefärben werden hierbei insbesondere Verfahren verstanden, bei denen der Farbstoff in die geschmolzene Kunststoffmasse eingearbeitet wird, z.B. unter Zuhilfenahme eines Extruders, oder bei dem der Farbstoff bereits Ausgangskomponenten zur Herstellung des Kunststoffes, z.B. Monomeren vor der Polymerisation, zugesetzt wird.

Besonders bevorzugte Kunststoffe sind Thermoplaste, beispielsweise Vinylpolymere, Polyester und Polyamide.

Geeignete Vinylpolymere sind Polystyrol, Styrol-Acrylnitril-Copolymere, Styrol-Butadien-Copolymere, Styrol-Butadien-Acrylnitril-Terpolymere, Polymethacrylat u.a..

Weiterhin geeignete Polyester sind: Polyethylenterephthalate, Polycarbonate und Celluloseester.

Bevorzugt sind Polystyrol, Styrol-Mischpolymere, Polycarbonate und Polymethacrylat. Besonders bevorzugt ist Polystyrol.

Ebenfalls eignen sich die erfindungsgemäßen Farbstoffe zum Färben von Duroplasten wie z.B. Phenolharzen, Harnstoffharzen, Melaminharzen, Formaldehydharzen, Epoxyharzen, Harzen aus ungesättigten Polyestern, Diallylphthalat u.a., von Lacken z.B. Nitrolacken sowie zum Färben von Ölen, Fetten, Wachsen, Kohlenwasserstoffen und ähnlichem, natürlicher oder synthetischer Herkunft.

Hauptanwendungsgebiete neben der Kunststoffeinfärbung können somit z.B. Schuhcremes, Bohnermassen, Kerzen, Seifen, Treibstoffe, Schmier- und Heizöle, Druckfarben und Lacke, Bürobedarf, Rauchfarbstoffe usw. sein.

Die erwähnten hochmolekularen Verbindungen können einzeln oder in Gemischen, als plastische Massen oder Schmelzen vorliegen.

Die erfindungsgemäßen Farbstoffe werden in feinverteilter Form zur Anwendung gebracht, wobei Dispergiermittel mitverwendet werden können aber nicht müssen.

Werden die Farbstoffe (I) nach der Polymerisation eingesetzt, so werden sie mit dem Kunststoffgranulat trocken vermischt oder vermahlen und dieses Gemisch z.B. auf Mischwalzen oder in Schnecken plastifiziert und homogenisiert. Man kann die Farbstoffe aber auch der schmelzflüssigen Masse zugeben und diese durch Rühren homogen verteilen. Das derart vorgefärbte Material wird dann wie üblich z.B. durch Verspinnen zu Borsten, Fäden usw. oder durch Extrusion oder im Spritzguß-Verfahren zu Formteilen weiterverarbeitet.

Da die Farbstoffe der Formel (I) gegenüber Polymerisationskatalysatoren, insbesondere Peroxiden, beständig sind, ist es auch möglich, die Farbstoffe den monomeren Ausgangsmaterialien für die Kunststoffe zuzusetzen und dann in Gegenwart von Polymerisationskatalysatoren zu polymerisieren. Dazu werden die Farbstoffe vorzugsweise in den monomeren Komponenten gelöst oder mit ihnen innig vermischt.

Die Farbstoffe der Formel (I) werden vorzugsweise zum Färben der genannten Polymeren in Mengen von 0,0001 bis 1 Gew.-%, insbesondere 0,01 bis 0,5 Gew.-%, bezogen auf die Polymermenge, eingesetzt.

Durch Zusatz von in den Polymeren unlöslichen Pigmenten, wie z.B. Titandioxid, können entsprechende wertvolle gedeckte Färbungen erhalten werden.

Titandioxid kann in einer Menge von 0,01 bis 10 Gew.-%, vorzugsweise 0,1 bis 5 Gew.-%, bezogen auf die Polymermenge, verwendet werden.

Nach dem erfindungsgemäßen Verfahren erhält man transparente bzw. gedeckte brillante, grünstichig gelbe bis violette Färbungen mit guter Hitzebeständigkeit sowie guter Licht- und Wetterechtheit.

In das erfindungsgemäße Verfahren können auch Mischungen verschiedener Farbstoffe der Formel (I) und/oder Mischungen von Farbstoffen der Formel (I) mit anderen Farbstoffen und/oder anorganischen bzw. organischen Pigmenten eingesetzt werden.

Die folgenden Beispiele dienen zur Erläuterung der vorliegenden Erfindung, ohne sie jedoch einzuschränken.

"Teile" sind als Gewichtsteile zu verstehen, soweit nicht anders angegeben.

Die in den Beispielen verwendeten Abkürzungen bedeuten:
Me = Methyl
Et = Ethyl
Ph = Phenyl

### Beispiel 1

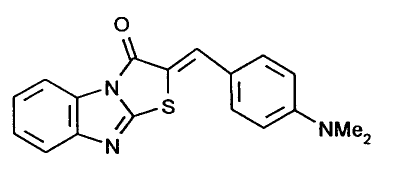

### A) Darstellung

Eine Mischung aus 2,0 g (2-Benzimidazolylmercapto)essigsäure der Formel 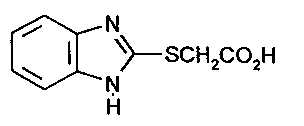
und 1,5 g 4-Dimethylaminobenzaldehyd wird in 18,5 ml Acetanhydrid und 15 ml Essigsäure für 30 Minuten auf 90°C erhitzt. Anschließend saugt man den gebildeten Niederschlag warm ab und wäscht mit Methanol nach. Nach dem Trocknen erhält man 2,4 g des Produktes der obigen Formel. λₘₐₓ = 442 nm (ε = 52.000) [CH₂Cl₂]

### B) Färbebeispiele

### Beispiel a)

100 Teile Polystyrol-Granulat und 0,02 Teile eines Farbstoffes der obigen Formel werden im Trommelmischer während 15 Minuten intensiv vermischt. Das trocken angefärbte Granulat wird bei 240°C auf einer Schneckenspritzgießmaschine verarbeitet. Man erhält transparente, gelbe Platten von sehr guter Lichtechtheit. Anstelle von Polystyrol-Polymerisat können auch Mischpolymerisate mit Butadien und Acrylnitril verwendet werden. Setzt man zusätzlich 0,5 Teile Titandioxid zu, so erhält man farbstarke gedeckte Färbungen.

### Beispiel b)

0,015 Teile des Farbstoffes aus Beispiel A) und 100 Teile Polymethylmethacrylat werden trocken vermischt und auf einem 1-Wellenextruder bei 230°C homogenisiert. Das als Strang aus dem Extruder austretende Material wird granuliert. Es kann anschließend zu Formen verpreßt werden. Man erhält einen transparent gelb gefärbten Kunststoff mit guter Licht- und Wetterechtheit.

### Beispiel c)

100 Teile eines handelsüblichen Polycarbonats werden in Form von Granulat mit 0,03 Teilen des Farbstoffes aus Beispiel A) trocken gemischt. Das so bestäubte Granulat wird auf einem 2-Wellenextruder bei 290°C homogenisiert. Man erhält eine transparente gelbe Färbung von guter Lichtechtheit. Das gefärbte Polycarbonat wird als Strang aus dem Extruder ausgetragen und zu Granulat verarbeitet. Das Granulat kann nach den üblichen Methoden der Konfektionierung thermoplastischer Massen verarbeitet werden.

Arbeitet man wie oben beschrieben, aber unter Zusatz von 1 % Titandioxid, so erhält man eine gelbe gedeckte Färbung.

### Beispiel d)

Mit 100 Teilen Styrol-Acrylnitril-Copolymerisat werden 0,04 Teile des Farbstoffes aus Beispiel A) trocken vermischt und in einem 2-Wellenextruder bei 190°C homogenisiert, granuliert und dann zu Formen auf übliche Weise verpreßt. Man erhält einen transparentgelben Kunststoff von guter Lichtechtheit.

### Beispiel e)

0,025 Teile des Farbstoffes aus Beispiel A) werden mit 100 Teilen Polyethylenterephthalat einer transparenten Type vermischt und in einem 2-Wellenextruder bei 280°C homogenisiert. Man erhält eine transparente, gelbe Färbung mit guter Lichtechtheit. Nach anschließender Granulierung kann der eingefärbte Kunststoff nach den üblichen Methoden der thermoplastischen Verformung verarbeitet werden. Arbeitet man unter Zusatz von 1 % Titandioxid, so erhält man eine gedeckte Färbung.

### Beispiel f)

In 98,9 Teilen Styrol werden 0,05 Teile tert.-Dodecylmercaptan sowie 0,05 Teile des Farbstoffes aus Beispiel A) gelöst. Diese Lösung dispergiert man in einer Lösung aus 200 Teilen entsalztem Wasser, 0,3 Teilen teilverseiftem Polyvinylacetat (z.B. Mowiol® 50/88 der Fa. Hoechst) und 0,05 Teilen Dodecylbenzolsulfonat. Nach Zugabe von 0,1 Teilen Dibenzoylperoxid in 1 Teil Styrol wird die Dispersion unter kräftigem Rühren auf 80°C erhitzt und die Polymerisation gestartet. Bei Anwendung folgender Polymerisationsbedingungen: 4 h bei 80°C, 2 h bei 90°C, 3 h bei 110°C, 2 h bei 130°C, erhält man das Polymerisat in einer Ausbeute von 98 % der Theorie. Das Polymerisat fällt in Form von Perlen an, die je nach Rührbedingungen einen Durchmesser von 0,1 bis 1,5 mm (D₅₀-Wert) aufweisen. Das Polymerisat wird durch Filtration von Serum getrennt, bei 110°C auf eine Restfeuchte von 0,5 % getrocknet. Nach dem Aufschmelzen in einem Mischaggregat (Heißwalze) werden 0,5 % Zinkstearat und 0,2 % Ionol zugemischt und das Polymerisat granuliert.

Das Polymerisat kann nach den üblichen Methoden der thermoplastischen Verformung, z.B. im Spritzguß-Verfahren, zu gelben, transparenten Formteilen verarbeitet werden.

### Beispiel g)

In 74,8 Teilen Styrol und 25 Teilen Acrylnitril werden 0,2 Teile tert.-Dodecylmercaptan sowie 0,01 Teile des Farbstoffes aus Beispiel A) gelöst, welche anschließend in einer Lösung aus 200 Teilen vollentsalztem Wasser und 0,2 Teilen eines mit Natriumhydroxid neutralisierten Copolymerisats von Styrol und Maleinsäureanhydrid dispergiert wird. Nach Zusatz von 0,1 Teilen Dibenzoylperoxid, gelöst in einem Teil Styrol, wird die Dispersion unter kräftigem Rühren auf 80°C erhitzt und die Polymerisation gestartet. Nach der Polymerisation wie im Beispiel f) wird auch in gleicher Weise, wie im Beispiel angegeben, aufgearbeitet. Als Schmiermittel wird 0,5 % Zinkstearat und als Alterungsschutzmittel 0,5 % Ionol auf der Heißwalze eingearbeitet. Das granulierte Polymerisat läßt sich zu transparenten gelben Formteilen verspritzt.

### Beispiel h)

In einem kontinuierlich arbeitenden, überflutet gefahrenen Vorreaktor wird eine Lösung aus 99,95 Teilen Styrol, 0,04 Teilen des Farbstoffes aus Beispiel A) und 0,01 Teilen Di-tert.-butylperoxid eingefahren und bei einer Temperatur von 75°C anpolymerisiert. Die aus dem Vorreaktor austretende, anpolymerisierte Lösung (Polystyrol-Gehalt 20 %) wird in einem 2-Wellenschneckenaggregat eingeführt. Die beiden Wellen laufen mit 20 Upm gegenläufig. Die vier heiz- bzw. kühlbaren Segmente der Schneckenmaschine werden in der Reihenfolge Produkteintritt - Produktaustritt auf 110°C, 130°C, 160°C, 180°C gehalten. Das Polymerisat verläßt den Schneckenreaktor mit einer Feststoffkonzentration von 80 %. In einem nachgeschalteten Extruder werden 3 Gew.-Teile Ionol und 5 Gew.-Teile Octylalkohol pro 1000 Gew.-Teile Polymerlösung zudosiert, das Polymerisat entgast und anschließend granuliert. Das gelb gefärbte Granulat kann zu Formteilen verarbeitet werden.

### Beispiel i)

0,02 Teile des Farbstoffes aus Beispiel A) werden in 74,97 Teilen Styrol und 25 Teilen Acrylnitril bzw. Methacrylnitril gelöst. Nach Zugabe von 0,01 Teilen Di-tert.-butylperoxid wird die so erhaltene Lösung in einem kontinuierlich arbeitenden, überflutet gefahrenen Vorreaktor eingefahren. Die Polymerisation und Aufarbeitung erfolgt wie im Beispiel h) angegeben. Das transparente, gelbe Granulat kann nach den üblichen Methoden der Verarbeitung thermoplastischer Massen zu Profilen und Platten weiterverarbeitet werden.

### Beispiel k)

In 99,97 Teilen Methylmethacrylat werden 0,03 Teile des Farbstoffes aus Beispiel A) gelöst. Nach Zugabe von 0,1 Teilen Dibenzoylperoxid wird die Lösung auf 120°C erhitzt und die Polymerisation gestartet. Nach 30 Minuten wird das anpolymerisierte Methylmethacrylat zwischen zwei Glasplatten bei 80°C während 10 Stunden auspolymerisiert. Man erhält gelbe, transparente Polymethylmethacrylat-Platten.

### Beispiel l)

100 Teile Polyamid-6-Schnitzel, erhalten durch Polymerisation von ε-Caprolactam, werden mit 0,05 Teilen des Farbstoffes aus Beispiel A) in einer Schüttelmaschine innig vermischt. Die so erhaltenen gepuderten Schnitzel werden bei 260°C in einem Extruder aufgeschmolzen, die erhaltene Schmelze durch eine Einloch-Düse vom Durchmesser 0,5 mm gepreßt und der austretende Faden mit einer Geschwindigkeit von ca. 25 m/Min. abgezogen. Der Faden läßt sich in heißem Wasser auf das 4-fache verstrecken. Erhalten wird ein transparent gelb gefärbter Faden von ausgezeichneter Lichtechtheit. Will man eine gedeckte Färbung erhalten, so gibt man zusätzlich 0,5 Teile Titandioxid zu.

Die Verweilzeit im Extruder kann ohne Beeinträchtigung des Farbtons bis zu 30 Minuten betragen.

### Beispiel m)

In eine Schmelze von 90 Teilen Paraffin und 10 Teilen Stearin werden bei 150°C 0,015 Teile des Farbstoffes der obigen Formel eingetragen und 1 Stunde verrührt. Aus der Masse lassen sich nach üblichen Verfahren Kerzen gießen, die intensiv gelb gefärbt sind.

Analog zu dieser Methode, aber unter Verwendung von 0,1 Teilen Farbstoff, lassen sich Schmelzen erhalten, die für die Tauchfärbung von Kerzen verwendbar sind.

### Beispiel 2

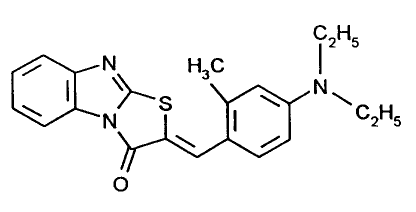

Eine Mischung aus 2,0 g (2-Benzimidazolylmercapto)essigsäure, 1,9 g 4-Diethylamino-2-methylbenzaldehyd, 12,5 ml Acetanhydrid und 10,0 ml Essigsäure wird 45 Minuten auf 100°C erhitzt. Anschließend kühlt man ab, saugt den gebildeten Niederschlag ab, wäscht mit Eisessig und Methanol nach und trocknet bei 50°C im Vakuum. Ausbeute: 2,7 g.
λₘₐₓ = 459 nm (ε = 47.600) [CH₂Cl₂]
Der Farbstoff ergibt, analog zu den Färbebeispielen 1B) gefärbt, kräftige Gelbtöne mit gutem Echtheitsniveau.

### Beispiel 3

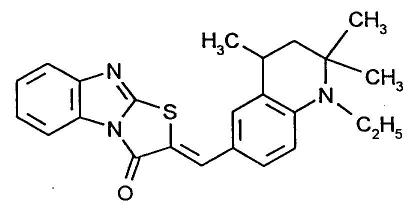

2,0 g (2-Benzimidazolylmercapto)essigsäure, 2,3 g eines Aldehydes der Formel 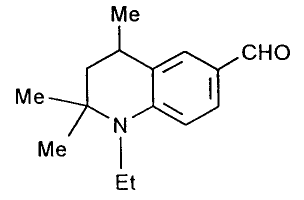
12,5 ml Acetanhydrid und 10 ml Essigsäure werden analog zu Beispiel 2 umgesetzt. Ausbeute: 3,0 g.
λₘₐₓ = 461 nm (ε = 56.700) [CH₂Cl₂]
Analog zu den Färbebeispielen 1B) gefärbt erhält man intensive gelbe Ausfärbungen.

**Beispiel 4**

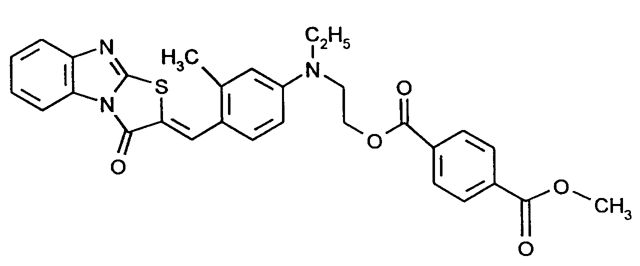

Eine Mischung aus 2,0 g (2-Benzimidazolylmercapto)essigsäure, 3,7 g eines Aldehydes der Formel 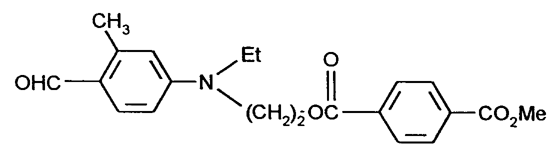
12,5 ml Acetanhydrid und 10 ml Essigsäure wird 1 Stunde unter Rückfluß erhitzt. Nach dem Abkühlen wird der Niederschlag abgesaugt, mit Eisessig und Methanol gewaschen und getrocknet. Nach Umkristallisierung aus Toluol erhält man 3,1 g des Farbstoffes der obigen Formel, der gemäß den Färbebeispielen 1B) intensive Gelbtöne liefert.
λₘₐₓ = 447 nm (ε = 44.600) [CH₂Cl₂]

### Beispiel 5

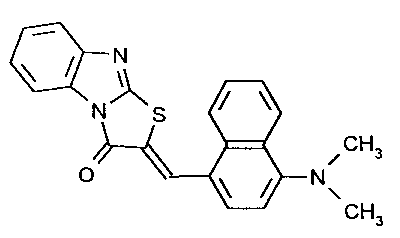

2,0 g (2-Benzimidazolylmercapto)essigsäure und 2,9 g 4-Dimethylaminonaphthalin-1-aldehyd werden in 12,5 ml Acetanhydrid und 10 ml Essigsäure 1 Stunde unter Rückfluß erhitzt. Der Niederschlag wird abgesaugt und mit Eisessig und Methanol gewaschen. Ausbeute: 2,3 g.
λₘₐₓ = 434 nm (ε = 25.200) [CH₂Cl₂]
Der Farbstoff liefert entsprechend den Bespielen 1B) gefärbt Gelbtöne mit guten Echtheiten.

### Beispiel 6

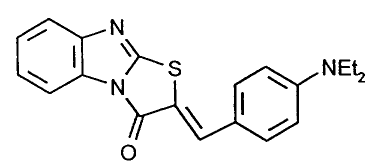

21 g (2-Benzimidazolylmercapto)essigsäure, 17,7 g 4-Diethylaminobenzaldehyd, 10 g Natriumacetat und 200 ml Acetanhydrid werden 2 Stunden unter Rückfluß erhitzt, auf 70°C abgekühlt, dann 500 ml Methanol zugetropft und die Mischung anschließend auf 25°C abgekühlt. Das Produkt wird abgesaugt, mit Methanol gewaschen und getrocknet. Ausbeute: 10,6 g
λₘₐₓ = 448 nm (ε = 52.900) [CH₂Cl₂]
Entsprechend der Färbebeispiele 1B) gefärbt liefert der Farbstoff intensive Gelbtöne.

### Beispiel 7

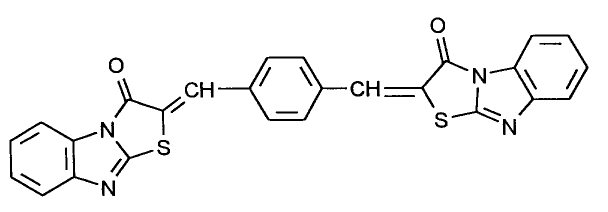

Eine Mischung aus 21 g (2-Benzimidazolylmercapto)essigsäure, 6,7 g 1,4-Formylbenzol, 10 g Natriumacetat und 200 ml Acetanhydrid wird 2 Stunden unter Rückfluß erhitzt. Anschließend kühlt man ab und verdünnt langsam mit 500 ml Methanol. Der Niederschlag wird abgesaugt, mit Methanol gewaschen und getrocknet. Ausbeute: 16,4 g. Die Reinigung kann durch Auskochen mit DMF erfolgen. Analog zu den Färbebeispielen 1B) gefärbt erhält man intensive, gelbe Ausfärbungen.

### Beispiel 8

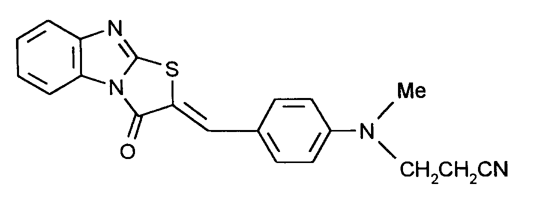

Eine Mischung aus 21 g (2-Benzimidazolylmercapto)essigsäure, 20 g 4-(N-β-Cyanethyl-N-methylamino)benzaldehyd, 10 g Natriumacetat und 150 ml Essigsäureanhydrid wird 4 Stunden zum Sieden erhitzt. Anschließend tropft man 400 ml Methanol zu, kühlt ab und isoliert das Produkt durch Filtration. Nach dem Umkristallisieren aus DMF erhält man 13,2 g.
λₘₐₓ = 432 nm (ε = 43.000)
Gemäß den Färbebeispielen 1B) ausgefärbt führt der Farbstoff zu gelben Produkten.

### Beispiel 9

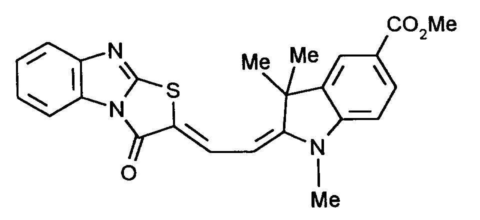

Eine Mischung aus 2,0 g (2-Benzimidazolylmercapto)essigsäure, 3,0 g eines Aldehydes der Formel 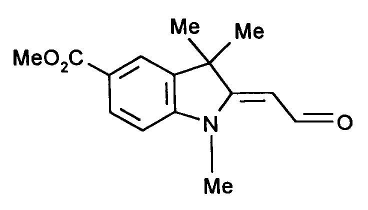
12,5 ml Acetanhydrid und 10 ml Essigsäure wird 30 Minuten auf 90°C erhitzt. Der gebildete Niederschlag wird bei 70°C abgesaugt, mit Eisessig und Methanol gewaschen und getrocknet. Ausbeute 2,8 g
λₘₐₓ = 468 nm (ε = 68.800) [CH₂Cl₂]
Entsprechend den Färbebeispielen 1B) gefärbt liefert der Farbstoff kräftige Gelbtöne.

### Beispiel 10

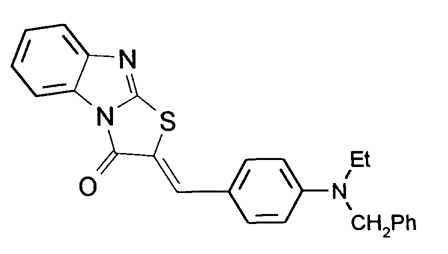

Eine Lösung aus 2,0 g (2-Benzimidazolyl-mercapto-)essigsäure, 2,4 g 4-(N-Benzyl-N-Ethyl-amino)benzaldehyd, 12,5 ml Essigsäureanhydrid und 10 ml Essigsäure wird 30 min auf 90°C erhitzt, wobei das Produkt ausfällt. Man verdünnt mit weiteren 10 ml Essigsäure und saugt den Farbstoff bei Raumtemperatur ab. Nach dem Waschen mit Essigsäure und Methanol erhält man 2,7 g des Farbstoffes der obigen Formel, der in Kunststoffen analog zu den Beispielen 1B) eingearbeitet, intensive Gelbtöne liefert.
λₘₐₓ = 443 nm (ε = 53.500) [CH₂Cl₂]

### Beispiel 11

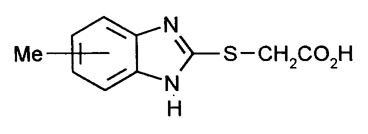

Zu einer Lösung von 94 g Natriumhydroxid in 11 Wasser werden bei 50°C 16 kg x-Methyl-2-mercaptobenzimidazol, das eine Mischung der Verbindungen der Formeln 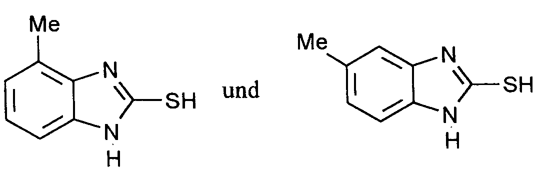
darstellt, gegeben und danach langsam (exotherm!) 100 g Chloressigsäure. Anschließend erhitzt man 30 min unter Rückfluß, kühlt auf Raumtemperatur ab und fällt das Produkt mit 150 ml konzentrierter Salzsäure. Man verdünnt mit 500 ml Wasser und saugt das Produkt ab. Nach der Wäsche mit Wasser und Trocknung im Vakuum bei 80°C erhält man 172 g des Zwischenprodukts der obigen Formel.

### Beispiel 12

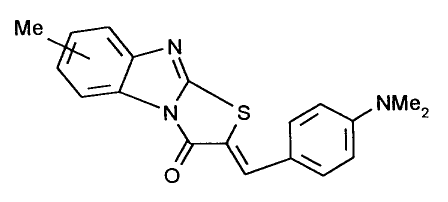

4,44 g der Verbindung aus Beispiel 11 und 2,98 g 4-Dimethylaminobenzaldehyd werden 30 min bei 90°C in einer Eisessig/Acetanhydrid-Mischung (20 ml/25 ml) kondensiert. Der Farbstoff wird bei 80°C abgesaugt und mit Eisessig und Methanol gewaschen. Zur Reinigung kann man das Rohprodukt in 400 ml Methylenchlorid lösen, die Lösung mit 4 g Kieselgel verrühren, filtrieren und das Filtrat am Rotavapor eindampfen.
Ausbeute: 9,0 g.
λₘₐₓ = 441 nm (ε = 48.200) [CH₂Cl₂]
Entsprechend den Färbebeispielen 1B) liefert dieses Produkt intensive brillante gelbe Färbungen in den angegebenen Medien.

### Beispiel 13

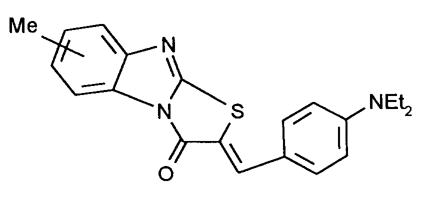

Analog zu Beispiel 13 erhält man unter Einsatz von 3,5 kg 4-Diethylaminobenzaldehyd 3,1 g des Farbstoffes der obigen Formel.
λₘₐₓ = 450 nm (ε = 55.100) [CH₂Cl₂].
Der Farbstoff färbt Kunststoffe analog zu den Beispielen 1B) kräftig gelb und besitzt ein gutes Echtheitsniveau.

### Beispiel 14

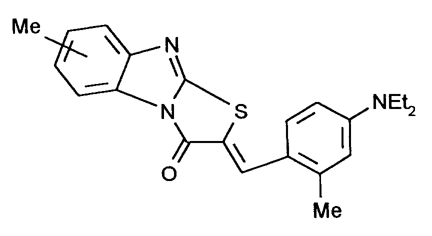

Entsprechend der Darstellungsmethode aus Beispiel 12 erhält man unter Verwendung von 3,8 g 4-(N,N-Diethylamino)2-methylbenzaldehyd 2,1 g der Verbindung der obigen Formel, welche in Kunststoffen analog zu den Beispielen 1B) intensive Gelbtöne liefert.
λₘₐₓ = 457 nm (ε = 48.400) [CH₂Cl₂]

### Beispiel 15

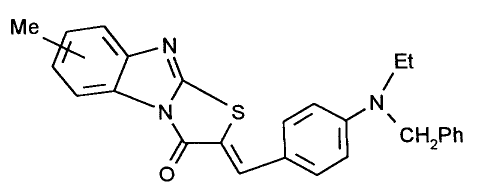

Analog zu Beispiel 12) unter Einsatz von 4,78 g 4-(N-Ethyl-N-benzylamino)benzaldehyd erhält man 4,7 g von diesem Farbstoff.
λₘₐₓ = 443 nm (ε = 52.100) [CH₂Cl₂]
In Kunststoffen eingearbeitet nach den Methoden der Beispiele 1B) liefert der Farbstoff Gelbtöne mit hoher Farbstärke und guten Echtheiten.

### Beispiel 16

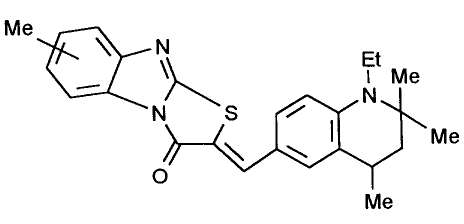

Die Darstellung erfolgt analog zu Beispiel 12), wobei 3,62 g des Aldehydes aus Beispiel 3) eingesetzt werden.
Ausbeute: 3,3 g.
λₘₐₓ = 460 nm (ε = 56.800) [CH₂Cl₂]
Der Farbstoff färbt Kunststoffe in echten Gelbtönen mit hoher Farbstärke und Brillanz.

## Patentansprüche

1. Verfahren zum Massefärben von Kunststoffen mit Farbstoffen der Formel (I) 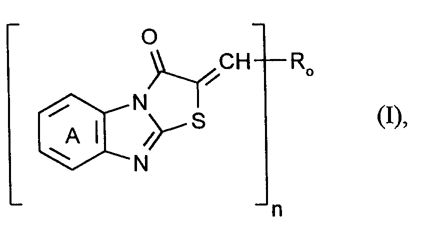 worin
n 1 oder 2, vorzugsweise 1 bedeutet,
Rₒ für n = 1, Aryl, Hetaryl oder Heterocyclylidenmethyl,
für n = 2, eine direkte Bindung oder Arylen bedeutet und
der Ring A unsubstituiert oder durch C₁-C₄-Alkyl, C₅-C₈-Cycloalkyl, C₆-C₁₀-Aryl, C₁-C₄-Alkyloxy, C₆-C₁₀-Aryloxy, C₆-C₁₀-Aryl- oder C₁-C₄-Alkylsulfonyl, Cyano, Halogen, insbesondere Chlor oder Brom, einen Rest der Formel -COR₁, worin R₁ für C₁-C₄-Alkoxy, Amino, C₁-C₄-Alkylamino, Di-C₁-C₄-alkylamino, C₆-C₁₀-Arylamino, C₁-C₄-Alkyl oder C₆-C₁₀-Aryl steht, substituiert ist oder einen ankondensierten aromatischen oder cycloaliphatischen Ring enthält.

2. Verfahren gemäß Anspruch 1 mit Farbstoffen der Formel (I), die der Formel (II) entsprechen 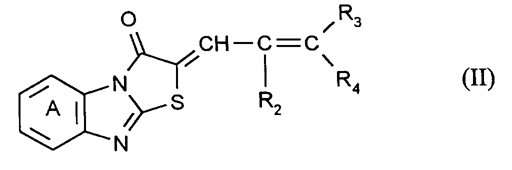 worin
R₂ und R₄ zusammen mit den C-Atomen, an die sie gebunden sind, einen unsubstituierten oder substituierten C₆-C₁₀-aromatischen, insbesondere Phenyl- oder Naphthyl-, oder heteroaromatischen, insbesondere einen gegebenenfalls ein- oder zweifach benzanellierten Thiophen-, Furan-, Pyrrol-, Thiazol-, Oxazol-, Imidazol-, Pyridin-, Pyran- oder Pyrimidin-Rest bilden und
R₃ für H, C₁-C₄-Alkyl, Halogen, insbesondere Cl und Br, OH, C₁-C₆-Alkoxy, Acyloxy, C₆-C₁₀-Aryloxy, C₁-C₆-Alkylthio, heterocyclisches 5- bis 7-gliedriges Amin, C₆-C₁₀-Arylthio, Di-C₁-C₆-alkylamino oder Acylamino steht, wobei die möglichen Substituenten an dem durch R₂ und R₄ gebildeten Ring vorzugsweise die Bedeutung von R₃ besitzen oder
R₃ und R₄ zusammen mit dem C-Atom, an das sie gebunden sind, den Rest eines unsubstituierten oder substituierten heterocyclischen Rings bilden, wobei die möglichen Substituenten vorzugsweise die Bedeutung von R₃ besitzen oder denen des Rings A entsprechen,
R₂ für H oder C₁-C₆-Alkyl steht und
der Ring A unsubstituiert oder in der nach Anspruch 1 angegebenen Weise substituiert ist.

3. Verfahren gemäß Anspruch 1 mit Farbstoffen der Formel (I), die der Formel (III) entsprechen 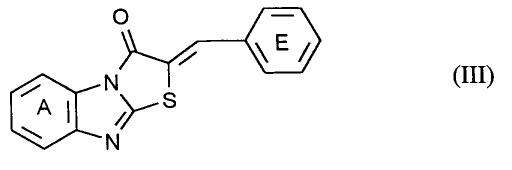 worin
der Ring A unsubstituiert oder in der nach Anspruch 1 genannten Weise substituiert ist,
und der Ring E unsubstituiert oder mit C₁-C₆-Alkyl, Halogen, insbesondere F, Cl und Br, OH, C₁-C₆-Alkoxy, C₆-C₁₀-Aryloxy, C₅-C₈-Cycloalkyl, Acyloxy, Di-C₁-C₆-alkylamino, heterocyclisches 5- bis 7-gliedriges Amin, Acylamino, C₁-C₆-Alkylthio oder Arylthio substituiert ist oder einen ankondensierten aromatischen, heterocyclischen oder aliphatischen 5- bis 7-gliedrigen Ring enthält.

4. Verfahren gemäß Anspruch 1 mit Farbstoffen der Formel (I), die der Formel (IV) entsprechen 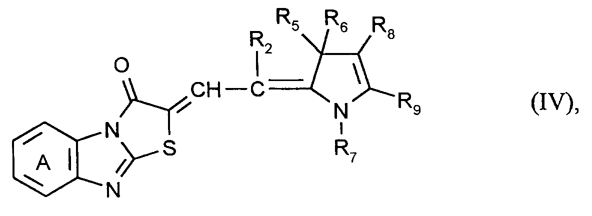 worin
der Ring A unsubstituiert oder in der nach Anspruch 1 genannten Weise substituiert ist,
R₂ die obige Bedeutung vorzugsweise für H steht,
R₅, R₆ unabhängig voneinander für C₁-C₄-Alkyl, vorzugsweise für CH₃, C₂H₅ oder C₃H₇ stehen oder gemeinsam zusammen mit dem C-Atom, an das sie gebunden sind, einen gegebenenfalls substituierten carbocyclischen 5- oder 6-Ring bilden, vorzugsweise zusammen eine Tetra- oder Penta-Methylengruppe bilden,
R₇ eine unsubstituierte oder durch Phenyl, Cl, OH, CN, C₁-C₆-Alkoxycarbonyl, C₁-C₆-Alkoxy, Di-(C₁-C₄)-alkylamino oder Acyloxy substituierte C₁-C₄-Alkylgruppe bedeutet und
R₈, R₉ zusammen mit den C-Atomen, an die sie gebunden sind, einen unsubstituierten oder substituierten Benzol- oder Naphthalinring bilden, wobei als bevorzugte Substituenten Cl, C₁-C₄-Alkyl, C₁-C₄-Alkoxycarbonyl und C₁-C₄-Alkoxy zu nennen sind.

5. Verfahren gemäß Anspruch 1 mit Farbstoffen der Formel (I), worin n = 2 bedeutet und R₀ für eine direkte Bindung oder einen unsubstituierten oder substituierten C₆-C₁₀-Arylenrest, vorzugsweise Phenylen oder Naphthylen, insbesondere 1,4-Phenylen steht.

6. Verfahren gemäß Anspruch 1, dadurch gekennzeichnet, daß der Kunststoff ein Thermoplast ist, insbesondere ein Vinylpolymer, Polyester oder Polyamid.

7. Kunststoffe, gefärbt nach wenigstens einem der Verfahren 1 bis 6.
